# FASCICULE DE BREVET EUROPEEN

(11) **EP 3 316 985 B1**
(45) Date de publication et mention de la délivrance du brevet: **21.10.2020**
(21) Numéro de dépôt: 15745235.0
(22) Date de dépôt: 03.07.2015
(51) Int. Cl.: B01D 33/23

(54) **SECTEUR A EPAISSEUR PROGRESSIVE**
SEKTOR MIT PROGRESSIVER DICKE
SECTOR HAVING PROGRESSIVE THICKNESS

(43) Date de publication de la demande: 09.05.2018
(73) Titulaire: Gaudfrin, 78100 Saint Germain en Laye (FR)
(72) Inventeur: GAUDFRIN, Guy, F-78860 Saint-Nom-la-Breteche (FR)
(74) Mandataire: Novagraaf Technologies
(86) Numéro de dépôt international: PCT/FR2015/051856
(87) Numéro de publication internationale: WO 2017/005989

(56) Documents cités:
- WO-A1-87/04640
- DE-C1- 3 706 402
- JP-U- S5 610 913
- US-A- 4 655 920
- US-A- 5 647 982

## Description

La présente invention concerne un secteur pour disque filtrant et plus particulièrement un élément de structure sous forme de secteur destiné à être assemblé avec des secteurs du même type pour former un disque d'un filtre rotatif, comprenant au minimum un disque, utilisé dans une installation industrielle de séparation liquide-solide sous vide ou sous pression.

Les secteurs sont généralement constitués d'un élément de structure recouvert d'une toile filtrante. L'élément de structure comprend, d'une part, un support drainant interne rigide supportant la toile filtrante et assurant l'écoulement du filtrat liquide et, d'autre part, un cadre délimitant le support drainant et doté d'une tubulure de raccordement à un arbre qui assure à la fois la collecte du filtrat et l'entraînement du secteur en rotation. L'épaisseur du support drainant est généralement constante.

Un mode de réalisation connu consiste, notamment, à utiliser une tôle ondulée unique dont les ondulations radiales forment des canaux de profondeur constante délimitant le volume intérieur du support drainant et assurant l'écoulement du liquide.

Dans le FR 2 567 039, il est prévu de perfectionner cet état de la technique en réalisant des secteurs d'épaisseur variable.

Plus précisément, le support drainant de chaque secteur présente une épaisseur croissante depuis son bord le plus éloigné du centre du disque, dit bord extérieur, jusqu'à l'embouchure de sa tubulure de raccordement à l'arbre.

La finalité de cette caractéristique est d'augmenter progressivement l'épaisseur du secteur le long de son rayon pour garantir une section de passage suffisante à l'embouchure de la tubulure de raccordement à l'arbre rotatif et optimiser ainsi le débit d'évacuation de la phase liquide.

Dans ce document, cet objectif est atteint par un mode de réalisation dans lequel les deux faces délimitant le compartiment intérieur du secteur sont constituées de panneaux (par exemple, en tôle ondulée) qui sont assemblés en étant inclinés l'un par rapport à l'autre pour obtenir la variation d'épaisseur recherchée et maintenus par des entretoises.

Bien que de tels secteurs d'épaisseur variable améliorent les performances et le rendement du procédé de filtration, ils demeurent très lourds du fait qu'ils comportent deux panneaux en tôle pour le support de la toile filtrante.

Avec de tels secteurs, en raison de leur poids, les phases de maintenance et, en particulier, leur remplacement sur les disques, sont des opérations délicates et laborieuses qui génèrent des contraintes d'outillage, la prise de mesures de sécurité renforcées nécessitant la présence d'au moins deux opérateurs.

Le poids de ces secteurs limite leur taille et donc également la taille des filtres dans lesquels ils sont placés.

Le document JPS 5 610 913 U divulgue un secteur filtrant pour disque filtrant comprenant un élément de structure ayant une épaisseur augmentant progressivement en direction de la tubulure de raccordement et dont les canaux sont parallèles.

La présente invention a pour but de résoudre ces problèmes techniques de manière satisfaisante et efficace en proposant une solution permettant de simplifier et d'alléger la structure des secteurs tout en conservant les avantages hydrauliques liés à sa variation d'épaisseur.

Ce but est atteint selon l'invention au moyen d'un secteur filtrant pour disque filtrant d'un filtre rotatif selon la revendication 1.

Ledit secteur filtrant comprend:
- un élément de structure constitué d'un support drainant interne nervuré et un cadre entourant le support drainant doté d'une tubulure de raccordement, et
- une toile filtrante recouvrant l'élément de structure,
caractérisé en ce que l'élément de structure a une épaisseur augmentant progressivement en direction de la tubulure de raccordement et que le support drainant est constitué d'une seule tôle. Le support drainant est constitué d'une tôle nervurée unique pourvue d'une alternance de canaux dont la profondeur augmente en se rapprochant de l'embouchure de sa tubulure.

L'utilisation de l'invention dans le cadre d'un procédé de séparation liquide-solide utilisant des filtres à disques rotatifs permet d'alléger les secteurs des filtres tout en optimisant le débit d'évacuation du filtrat et en améliorant par là le rendement du procédé. Par ailleurs, les opérations de maintenance sont simplifiées et facilitées par la diminution du poids des secteurs. En outre, le profil aminci du secteur lui confère une flexibilité qui diminue les risques de rupture du secteur sous charge.

Le support drainant est perforé de trous alignés dont le diamètre augmente en phase avec l'épaisseur du secteur. Ces perforations facilitent l'écoulement des liquides dans le secteur, et sont placées sur les parois des canaux. Le débit des fluides, ou filtrats liquides, augmentant en se rapprochant de la tubulure de raccordement, l'augmentation des diamètres des trous dans le même sens améliore cet écoulement.

Avantageusement, le cadre est constitué de seulement deux coques réalisées par emboutissage. Le pourtour de la tôle nervurée constituant le support drainant est recouvert dudit cadre périphérique.

Avantageusement, les deux coques du cadre ont un profil en U avec des côtés de longueur progressive. La hauteur des côtés de la section en U du cadre augmente du bord extérieur vers l'embouchure de la tubulure, comme la profondeur des canaux de la tôle nervurée. De préférence, le cadre est constitué de deux coques identiques solidarisées selon un axe central du secteur en emprisonnant la tôle nervurée. Les deux coques latérales du cadre sont reliées entre elles par au moins deux renforts transversaux disposés de part et d'autre de la tôle nervurée.

Le profil en U du cadre constitue une âme dont la largeur augmente donc en phase avec l'épaisseur du secteur. L'augmentation de la largeur de l'âme de la section en U du cadre du bord extérieur vers l'embouchure permet de la renforcer à l'endroit où le cadre est le plus sollicité.

Selon une première variante, le support drainant a des canaux en forme de U.

Selon une deuxième variante, le support drainant a des canaux en forme de V. Dans ce cas, le sommet des ondulations a un même rayon de courbure sur les deux faces de la tôle nervurée. De préférence, selon cette variante, il est prévu que le pas des ondulations soit compris entre 10 et 20 mm.

Les canaux du support drainant sont parallèles. Ce mode de réalisation est adapté pour les disques filtrants de grand diamètre (plus de 4 m de diamètre) car au-delà de 4 m de diamètre, le pas des canaux rayonnants augmentant de l'embouchure de la tubulure vers l'extérieur du secteur serait trop important pour soutenir la toile filtrante correctement.

L'invention concerne également le filtre rotatif équipé d'un secteur filtrant présentant au moins une des caractéristiques précédentes.

D'autres avantages pourront encore apparaître à l'homme du métier à la lecture des exemples ci-dessous, illustrés par les figures annexées, donnés à titre d'exemple :
- La figure 1 représente une vue de face d'un secteur selon l'invention,
- La figure 2 est une vue en coupe transversale selon II-II de la figure 1,
- La figure 3 est une vue en coupe transversale selon III-III de la figure 1,

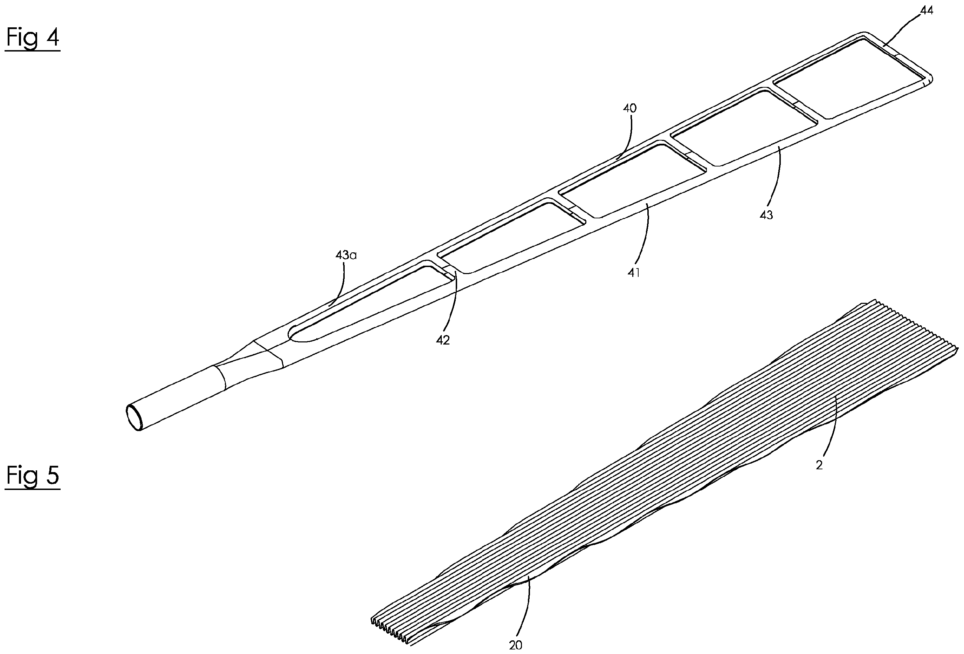

- La figure 4 représente une vue en perspective du cadre d'un secteur selon l'invention,
- La figure 5 est une perspective d'un support drainant d'un secteur de l'invention,
- La figure 6 est une vue d'une des coques du cadre de la figure 4 avant l'emboutissage,
- La figure 7 est une vue de la tôle du support drainant avant sa transformation.

Dans la suite de la description on appellera "intérieur" le coté du secteur disposé près de l'axe du filtre, c'est-à-dire le coté de la tubulure de raccordement, et "extérieur" le côté opposé audit axe.

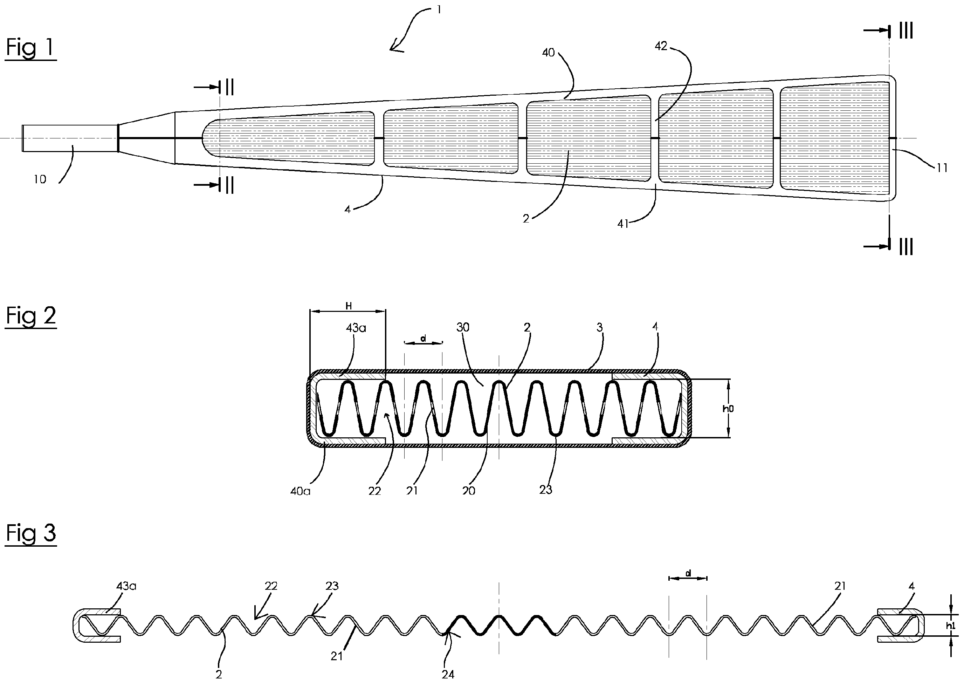

Le secteur représenté sur la figure 1 est destiné à être associé à d'autres secteurs identiques qui sont tous raccordés à un arbre de support et d'entraînement rotatif d'un filtre (non représenté) et qui assure l'évacuation du filtrat liquide.

Chaque secteur comprend un élément de structure 1 constitué d'un support drainant 2 rigide nervuré et un cadre 4 entourant le support drainant 2 et doté d'une tubulure de raccordement 10. L'élément de structure 1 sert de support et d'appui à une toile filtrante 3 (représentée en coupe uniquement sur la figure 2). La toile filtrante 3, en appui sur le support drainant 2, délimite le volume intérieur du secteur filtrant 30 pour l'écoulement du filtrat liquide lors de la mise en œuvre du cycle de séparation liquide-solide.

Le pourtour du support drainant 2 constitué d'une tôle nervurée est recouvert d'un cadre périphérique 4 de section transversale 40a en U assurant le maintien et la rigidification du support drainant 2.

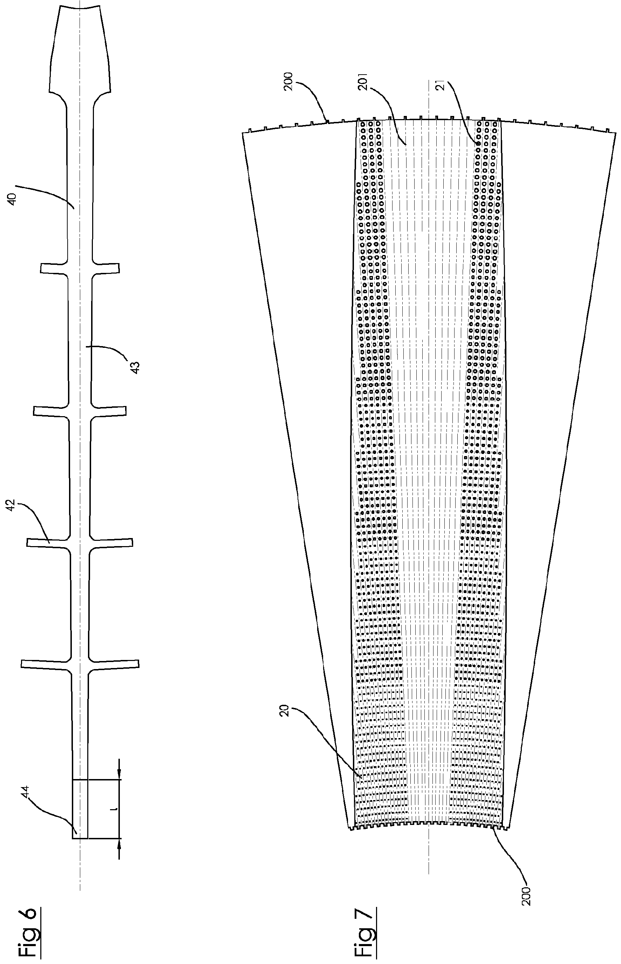

Le cadre 4 est constitué de deux coques 40 et 41 symétriques avec des ailes 42 constituant des renforts et soudées entre elles. Chaque coque 40 ou 41 est réalisée à partir d'une tôle plate découpée selon la figure 6, puis emboutie pour réaliser un profil en U puis soudées. La coque 40 illustrée figure 6 comprend une âme 43 et quatre ailes 42. Les coques 40 et 41 pourraient comprendre plus ou moins de quatre ailes. L'extrémité 44 des coques 40 et 41, de longueur I, est pliée après emboutissage pour former l'extrémité du cadre 4.

Les deux coques 40 et 41 du cadre 4 sont reliées par les ailes 42 et par l'extrémité 44 pliée du cadre 4 constituant des renforts transversaux en vue d'éviter les risques de déformation du secteur.

La largeur de l'âme 43 de chaque coque 40 ou 41 du cadre 4 augmente, sur les bords latéraux du cadre 4, pour suivre la variation de la profondeur h des canaux 22 le long du support drainant 2. Une fois l'âme 43 pliée, elle présente une forme en U avec deux cotés 43a.

La hauteur H des cotés 43a de la section en U du cadre 4 augmente aussi sur les bords latéraux du cadre, en se rapprochant radialement de l'embouchure de la tubulure 10 du secteur. Cette hauteur H peut varier par exemple entre 15 et 45 mm.

De préférence, le cadre 4 est constitué de deux coques, obtenues par emboutissage d'une tôle plane, identiques qui sont solidarisées selon l'axe central du secteur, par exemple, au moyen d'une soudure, en emprisonnant le support drainant 2.

Pour réduire le poids du secteur et améliorer l'écoulement du filtrat liquide, le support drainant 2 est constitué d'une seule tôle nervurée 20 unique pourvue d'une alternance de canaux, ou rainures 22, dont la profondeur h augmente en se rapprochant de l'embouchure de la tubulure 10, comme représenté sur les figures. La profondeur h0 au niveau de l'embouchure de la tubulure 10 est plus grande que la profondeur h1 au niveau de l'extrémité 11.

La juxtaposition de ces canaux 22 qui s'étendent de l'embouchure de la tubulure 10 jusqu'à l'extrémité 11 sur le secteur, forme globalement le support drainant 2 pour l'écoulement du filtrat liquide.

La profondeur des canaux 22 augmente en se rapprochant de l'embouchure de la tubulure. Les sommets 23 des ondulations formant les canaux 22 assurent localement le support de la toile filtrante 3.

Pour un secteur d'une longueur compris entre 1,5 et 2,5 m, la profondeur h des canaux 22 du support drainant 2 peut varier par exemple de 5 mm à 35 mm.

Dans le mode de réalisation illustré par les figures, les canaux 22 forment une série d'ondulations parallèles de section sensiblement en V dont chaque sommet 23 a un profil arrondi avec un rayon de courbure compris entre 2 et 3 mm.

Le pas d des ondulations, c'est à dire, la distance séparant deux sommets 23 consécutifs, est compris entre 10 et 20 mm et reste ici invariable sur la longueur du support drainant 2.

Il serait, toutefois, possible dans une variante non représentée, de prévoir que les ondulations du support drainant 2 aient un pas variable entre le bord extérieur du secteur et son embouchure de sorte qu'elles ne soient donc pas nécessairement parallèles, elles pourraient par exemple être rayonnantes.

Les canaux 22 sont réalisés par déformation et/ou emboutissage d'une tôle plane d'acier dont l'épaisseur est comprise entre 0,5 et 1,5 mm.

Le mode de réalisation du support drainant 2 consiste en la perforation et au pliage d'une tôle plane 20 de manière à obtenir une tôle ondulée formant des canaux 22 de hauteur progressive, parallèle ou non, dont les parois 24 sont munies de trous 21. On note que le diamètre des dits trous 21 croît d'un bord à l'autre de la tôle 20 sur sa longueur. Au final, les trous 21 sont disposés sur les parois 24 des canaux 22 de façon à faciliter l'écoulement du filtrat.

L'étape 1 consiste au traçage des lignes de trous 21 et des génératrices de pliage 201. Ce traçage doit d'une part garantir le positionnement des trous 21 au milieu des parois 24 des canaux 22 et d'autre part assurer la régularité des ondulations.

Compte tenu de la profondeur progressive des canaux 22, le développé théorique est corrigé d'un facteur de fluage non constant d'un bord à l'autre sur la longueur de la tôle 20.

Le facteur de fluage qui varie en fonction du matériau, de l'épaisseur et/ou d'un traitement thermique se verra ajusté par une série de tests de formage.

L'étape 2 consiste au découpage et à la perforation de la tôle 20, par exemple au moyen d'un laser ou d'une poinçonneuse. A cette étape, des languettes de guidage 200 seront également découpées aux extrémités des génératrices de pliage 201.

L'étape 3 consiste au formage des ondulations, par exemple au moyen d'un outil d'emboutissage muni d'un poinçon et d'une matrice.

La hauteur du poinçon et la profondeur de la matrice augmentent progressivement d'une extrémité à l'autre sur la longueur de l'outil pour former des canaux d'épaisseur croissante.

De ce fait, le contact du poinçon avec la tôle 20 se fait de façon progressive d'une extrémité à l'autre de l'outil. Il est donc nécessaire de guider parfaitement la tôle du début à la fin du formage des canaux 22. Les languettes de guidage 200 prévues aux extrémités de chaque génératrice de pliage 201 coulissent verticalement dans des rainures taillées dans la matrice de l'outil empêchant ainsi tout déplacement latéral de la tôle 20. Les canaux 22 sont ainsi formés les uns après les autres en garantissant la régularité des ondulations.

Nous allons maintenant décrire le cycle de séparation liquide solide qui se décompose de la façon suivante:
Le volume intérieur du secteur filtrant délimité par la toile qui l'entoure 30 est maintenu en dépression pendant la phase de filtration lorsque le secteur est immergé dans la solution à filtrer.

Lors de cette phase, la toile filtrante 3 se plaque contre le support drainant 2 et le liquide est aspiré au travers de la toile filtrante 3 vers le volume intérieur du secteur 30 vers la tubulure de raccordement 10 puis évacué par l'arbre-collecteur situé sur l'axe du filtre, tandis que les matières solides restent appliquées contre la face extérieure de la toile filtrante 3 sous forme de « gâteau ».

A la phase de filtration-aspiration succède, par rotation du disque, une phase de nettoyage-soufflage de la toile filtrante 3 au cours de laquelle le volume intérieur du secteur filtrant 30 est mis sous pression d'air comprimé qui décolle les gâteaux du secteur en passant à travers la toile filtrante 3.

Le débit et le rendement de filtration sont optimisés par la diminution globale du volume intérieur du secteur 30 en réduisant son épaisseur au niveau du bord extérieur 11 du secteur tout en conservant une section suffisante à l'embouchure de sa tubulure de raccordement 10 à l'arbre collecteur.

L'épaisseur du volume intérieur du secteur filtrant 30 varie donc de façon continue sur toute la longueur radiale du secteur et croît du bord extérieur 11 jusqu'à l'embouchure de la tubulure 10.

Le profil du support drainant et donc du secteur est ainsi effilé à la manière d'une pale ou d'une aile.

## Revendications

1. Secteur filtrant pour disque filtrant d'un filtre rotatif comprenant
- un élément de structure (1) constitué d'un support drainant (2) interne nervuré et un cadre (4) entourant le support drainant (2) doté d'une tubulure de raccordement (10), et
- une toile filtrante (3) recouvrant l'élément de structure (1),
l'élément de structure (1) ayant une épaisseur augmentant progressivement en direction de la tubulure de raccordement (10) et le support drainant (2) étant constitué d'une seule tôle (20), ladite tôle étant pourvue d'une alternance de canaux parallèles, **caractérisé en ce que** le support drainant (2) est perforé de trous (21) alignés placées sur les parois des canaux et dont le diamètre augmente avec l'épaisseur du secteur.

2. Secteur filtrant selon une des revendications précédentes **caractérisé en ce que** le cadre (4) est constitué de seulement deux coques (40, 41) réalisées par emboutissage.

3. Secteur filtrant selon la revendication précédente **caractérisé en ce que** les deux coques (40, 41) du cadre ont un profil en U avec des cotés (43a) de longueur progressives.

4. Secteur filtrant selon une des revendications précédentes **caractérisé en ce que** le support drainant (2) a des canaux (22) en forme de U.

5. Secteur filtrant selon une des revendications 1 à 3 **caractérisé en ce que** le support drainant (2) a des canaux (22) en forme de V.

6. Filtre rotatif équipé d'un secteur filtrant selon une des revendications précédentes.

## Patentansprüche

1. Filtersektor für eine Filterscheibe eines Drehfilters, welcher umfasst:
- ein Strukturelement (1), das aus einem gerippten inneren Drainageträger (2) und einem den Drainageträger (2) umgebenden Rahmen (4), der mit einem Anschlussstutzen (10) ausgestattet ist, besteht, und
- ein Filtertuch (3), welches das Strukturelement (1) bedeckt,
wobei das Strukturelement (1) eine Dicke aufweist, die in Richtung des Anschlussstutzens (10) allmählich zunimmt, und der Drainageträger (2) aus einem einzigen Blech (20) besteht, wobei das Blech mit parallelen Kanälen in wechselnder Folge versehen ist,
**dadurch gekennzeichnet, dass** der Drainageträger (2) mit fluchtenden Löchern (21) perforiert ist, die an den Wänden der Kanäle angeordnet sind und deren Durchmesser mit der Dicke des Sektors zunimmt.

2. Filtersektor nach einem der vorhergehenden Ansprüche, **dadurch gekennzeichnet, dass** der Rahmen (4) aus nur zwei Schalen (40, 41) besteht, die durch Tiefziehen hergestellt sind.

3. Filtersektor nach dem vorhergehenden Anspruch, **dadurch gekennzeichnet, dass** die zwei Schalen (40, 41) des Rahmens ein U-förmiges Profil mit Seiten (43a) mit zunehmenden Längen aufweisen.

4. Filtersektor nach einem der vorhergehenden Ansprüche, **dadurch gekennzeichnet, dass** der Drainageträger (2) U-förmige Kanäle (22) aufweist.

5. Filtersektor nach einem der Ansprüche 1 bis 3, **dadurch gekennzeichnet, dass** der Drainageträger (2) V-förmige Kanäle (22) aufweist.

6. Drehfilter, welches mit einem Filtersektor nach einem der vorhergehenden Ansprüche ausgestattet ist.

## Claims

1. A filtering sector for a filtering disk of a rotary filter comprising:
- a structural element (1) constituted by a ribbed inner draining support (2) and a frame (4) surrounding the draining support (2), said structural element is provided with a connection tube (10); and
- a filtering fabric (3) which covers the structural element (1),
the structural element (1) having a thickness which increases progressively in the direction of the connection tube (10), and the draining support (2) being constituted by a single metal sheet (20), said metal sheet (20) being provided with an alternation of parallel channels (22), **characterized in that** the draining support (2) is perforated by aligned holes (21) placed in the walls of the channels, the diameter of which increases with the thickness of the sector.

2. The filtering sector as claimed in claims 1 , **characterized in that** the frame (4) is constituted by only two shells (40, 41) produced by stamping.

3. The filtering sector as claimed in the preceding claim, **characterized in that** the two shells (40, 41) of the frame have a profile in the form of a "U" with sides (43a) with a progressive length.

4. The filtering sector as claimed in claims 1 to 3, **characterized in that** the draining support (2) has channels (22) in the form of a "U".

5. The filtering sector as claimed in one of claims 1 to 3, **characterized in that** the draining support (2) has channels (22) in the form of a "V".

6. A rotary filter equipped with a filtering sector as claimed in one of the claims 1 to 5.
